# EUROPEAN PATENT APPLICATION

(11) **EP 4 484 616 A1**
(43) Date of publication of application: **01.01.2025**
(21) Application number: 22933279.6
(22) Date of filing: 22.03.2022
(51) Int. Cl.: C25B 11/042, C25B 11/037, C25B 11/054, C25D 17/10, H01M 4/86, H01M 4/88

(54) **ELECTRODE AND METHOD FOR MANUFACTURING SAME**

(71) Applicant: Fuji Die Co., Ltd., Tokyo 146-0092 (JP)
(72) Inventor: WATANABE, Yuki, Tokyo 146-0092 (JP); YAMAMOTO, Akane, Tokyo 146-0092 (JP); WADA, Kouhei, Tokyo 146-0092 (JP)
(74) Representative: Diehl & Partner
(86) International application number: PCT/JP2022/013312
(87) International publication number: WO 2023/181133

(57) **Abstract**

A method for manufacturing an electrode that has a specific surface area of 1 × 10⁴ cm⁻¹ or more, and has a surface in which pores occupy 5% or more and 20% or less by area ratio when observed by SEM, the method comprising a step of molding a raw material powder that has an average particle size of 1000 µm or less, and contains at least one selected from the group consisting of metal powder, alloy powder and conductive non-metal powder, at a molding pressure of 10 MPa or more, the resultant molded body being used as an electrode, or further comprising a step of subjecting the resultant molded body to a heat treatment and the resultant heat-treated body being used as an electrode.

## Description

### FIELD OF THE INVENTION

The present invention relates to an electrode and a method for manufacturing the same.

### BACKGROUND OF THE INVENTION

By electrolyzing an aqueous solution of sodium chloride, chlorine and sodium hydroxide are generated. Electrolysis in aqueous solutions, for example, electrorefining of metals such as copper and zinc, electrochemical plating of metals such as zinc and nickel onto material surfaces, etc., has been widely used industrially. In addition, with the recent trend toward decarbonization, efforts to electrolyze water to obtain hydrogen and oxygen have been increasing. In such electrochemical reactions in aqueous solutions, electrification is essential, and an electrode that actually causes the reaction is also indispensable.

The material of the electrode varies depending on the type of electrochemical reaction, but carbon and metals such as nickel, platinum, copper, titanium, etc. are used. The shape of the electrode is rod-like or platelike, as well as mesh-like or sponge-like. Electrodes are made mesh-like or sponge-like in order to increase the surface area per volume, because the larger the surface area, the greater the reaction rate at the same potential. Therefore, electrodes with a large surface area per volume are desired.

JP 2021-55187 A (Patent Document 1) describes TiNi powder used for an electrode for aqueous solution electrolysis and a method of producing an electrode material by molding and sintering the TiNi powder. Although this electrode has better properties than ordinary bulk materials, its performance as an electrode material is not sufficient. Furthermore, heat treatment is essential for manufacturing the electrode, which is disadvantageous in terms of cost.

In addition, a catalyst may be applied to the electrode surface in order to further increase the efficiency. Higher efficiency contributes to improved economic efficiency and the reduction of environmental load substances such as CO₂, so more efficient catalysts are required. However, existing catalyst addition methods mainly involve application to the surface by coating or roll-to-roll, and are known to deteriorate or peel off with use. Therefore, a method for applying highly active catalysts in a stable state is required.

Japanese Examined Patent Publication 63-018672 B2 (Patent Document 2) discloses a method including steps of coating a solution of a thermally decomposable compound of platinum group metal to the surface of a metal substrate, heating and decomposing, and then drying it to form layers of platinum group metal and platinum group metal oxide as catalyst layers. However, the coating and drying process is required for each catalyst layer required. Also, peeling of the catalyst layer with the use of an electrode is an issue.

### PRIOR ART REFERENCES

Patent Reference 1: JP 2021-55187 A
Patent Reference 2: Japanese Examined Patent Publication 63-018672 B2

### OBJECT OF THE INVENTION

Conventional electrodes use porous alloys, or sponge-like or mesh-like metal supports to increase the surface area, but which is insufficient. In addition, when a catalyst layer is formed on a metal support, there is a problem that the catalyst peels off. Therefore, we have developed an electrode that has a high specific surface area by compacting the powder and does not deteriorate due to peeling by dispersing the catalyst in the support.

Normally, when manufacturing an electrode, sintering is performed after press molding. However, the inventors have discovered that an electrode with high electrochemical activity can be obtained without sintering or by performing heat treatment at a lower temperature than the conventional sintering temperature, and the present invention has been completed.

Accordingly, an object of the present invention is to provide an electrode with high electrochemical activity and a manufacturing method thereof by press molding raw material powder including at least one selected from the group consisting of metal powder, alloy powder and conductive non-metal powder, or that mixed with a catalyst, taking advantage of a high surface area of the molded body of the raw material powder.

### SUMMARY OF THE INVENTION

Accordingly, a method of an embodiment of the present invention for manufacturing an electrode that has a specific surface area of 1 × 10⁴ cm⁻¹ or more, and has a surface in which pores occupy 5% or more and 20% or less by area ratio when observed by SEM, comprises a step of molding a raw material powder that has an average particle size of 1000 µm or less, and contains at least one selected from the group consisting of metal powder, alloy powder and conductive non-metal powder, at a molding pressure of 10 MPa or more, the resultant molded body being used as an electrode.

A method of another embodiment of the present invention for manufacturing an electrode that has a specific surface area of 1 × 10⁴ cm⁻¹ or more, and has a surface in which pores occupy 5% or more and 20% or less by area ratio when observed by SEM, comprises steps of molding a raw material powder that has an average particle size of 1000 µm or less, and contains at least one selected from the group consisting of metal powder, alloy powder and conductive non-metal powder, at a molding pressure of 10 MPa or more, and subjecting the resultant molded body to a heat treatment, the resultant heat-treated body being used as an electrode.

When the surface of the heat-treated body is observed by SEM, the fusion rate of particles is preferably 80% or less.

A catalyst is preferably added to the raw material powder. The amount of the catalyst added is preferably 0.03% or more and 5% or less by mass of the amount of the raw material powder. It is preferable that carbon or conductive oxide is added to the raw material powder, and the amount of the carbon or conductive oxide added is 1/100 or more and 10 times or less by mass of the amount of the catalyst added. It is preferable that fluorine resin is added to the raw material powder, and the amount of the fluorine resin added is 1/1000 or more and 1 time or less by mass of the amount of the catalyst added.

It is preferable that when the raw material powder has an average particle size of more than 100 µm and 1000 µm or less, the raw material powder is mixed with that with an average particle size of 10 µm or less, and the molding pressure is 10 MPa or more and 700 MPa or less.

It is preferable that when the surface of the electrode was observed by SEM, the average size of the pores is 1/50 or more and 5 times or less the average particle size of the raw material powder, and the maximum size of the pores is 10 times or less the average particle size of the raw material powder.

The method preferably further comprises steps of adding 0% or more and 70% or less by volume of coarse pore material to the raw material powder, and removing the coarse pore material after the step of molding the raw material powder, so that when the surface of the electrode is observed by SEM, coarse pores with a size more than 10 times the particle size of the raw material powder are present.

An electrode of an embodiment of the present invention is manufactured by any of the above method. The electrode of the present invention is preferably an electrode for electrolysis.

### EFFECTS OF THE INVENTION

According to the present invention, an electrode that has a specific surface area of 1 × 10⁴ cm⁻¹ or more, and has a surface in which pores occupy 5% or more and 20% or less by area ratio when observed by SEM is manufactured by press molding raw material powder including at least one selected from the group consisting of metal powder, alloy powder and conductive non-metal powder, or that mixed with a catalyst, or press molding it and then subjecting it to a heat treatment. Therefore, an electrode with high electrochemical activity can be obtained taking advantage of a high surface area of the molded body of the raw material powder. Such an electrode is also capable of stably imparting a catalyst, and can be particularly suitably used as an electrode for electrolysis.

### BRIEF DESCRIPTION OF THE DRAWINGS

Fig. 1 is SEM photographs showing the surfaces of the electrodes of Invention Products 11 and 13 and Comparative Products 4 and 7.
Fig. 2 is a graph showing the relationship between the potential and the current density in the electrodes of Invention Products 1, 3, and 4 and Comparative Product 1.
Fig. 3 is a graph showing the relationship between the potential and the current density in the electrodes of Invention Products 6 and 9 and Comparative Products 3 and 4.
Fig. 4 is SEM photographs showing the surfaces of the electrodes of Invention Products 5 and 6 and Comparative Products 3 to 5.
Fig. 5 is a graph showing the relationship between the potential and the current density in the electrodes of Invention Product 1 and Comparative Product 8.
Fig. 6 is a graph showing the relationship between the potential and the current density in the electrodes of Invention Product 28 and Comparative Product 9.
Fig. 7 is a graph showing the relationship between the potential and the current density in the electrodes of Invention Product 1 and Comparative Products 28 to 31.
Fig. 8 is a graph showing the relationship between the potential and the current density in the electrodes of Invention Products 5 and 32 and Comparative Product 10.
Fig. 9 is SEM photographs showing the surfaces of the electrodes of Invention Products 33 and 34.
Fig. 10 is a schematic view showing the penetration of an aqueous solution into the surfaces of the electrodes of Invention Products 33 and 34.
Fig. 11 is a graph showing the relationship between the potential and the current density in the electrodes of Invention Products 44 and 45 and Comparative Product 13.
Fig. 12 is SEM photographs showing the surfaces of the electrodes of Invention Products 5 and 8 and Comparative Products 46 to 48.

### DESCRIPTION OF THE PREFERRED EMBODIMENTS

### [1] Method for manufacturing electrode

A method of the first embodiment of the present invention for manufacturing an electrode that has a specific surface area of 1 × 10⁴ cm⁻¹ or more, and has a surface in which pores occupy 5% or more and 20% or less by area ratio when observed by SEM, comprises a step of molding a raw material powder that has an average particle size of 1000 µm or less, and contains at least one selected from the group consisting of metal powder, alloy powder and conductive non-metal powder, at a molding pressure of 10 MPa or more, the resultant molded body being used as an electrode. Here, pores mean the gaps between particles in the molded body, including linear-like and mesh-like pores formed continuously between multiple particles. The average particle size of powder means the median diameter (D50) of powder particles.

When the average particle size of the raw material powder exceeds 1000 µm, the press moldability deteriorates. A plurality of powders with different particle sizes may be mixed to prepare the raw material powder. For example, powder of 10 µm or less may be added to coarse powder of more than 100 µm to increase the surface area relative to the mass of the raw material powder. The average particle size of the raw material powder is preferably 0.01 µm or more so that the pores of the obtained electrode are large enough to have an electrochemical activity effect, and for economic reasons. The average particle size of the raw material powder is more preferably 0.1 to 500 µm, and most preferably 0.5 to 300 µm. In addition, when raw material powder of a single particle size is used, the surface area relative to the mass of the raw material powder becomes large, so the average particle size of the raw material powder is preferably 100 µm or less.

The method of molding the raw material powder is not particularly limited as long as it is a general molding method for powder, and examples thereof include compression molding using a metal mold, etc. In the present invention, since sintering is not performed after molding the electrode, cold-compression molding is particularly preferable as the molding method.

When the molding pressure is less than 10 MPa, the strength of the obtained electrode is insufficient. The molding pressure is preferably 10 MPa or more and 700 MPa or less. When the molding pressure exceeds 700 MPa, the pore ratio of the electrode decreases, the specific surface area becomes small, and the usable mold method is limited. The molding pressure is more preferably 50 to 500 MPa, and most preferably 100 to 500 MPa.

The metal used for the metal powder is not particularly limited as long as it is used as a raw material for an electrode, and examples thereof include nickel, copper, silver, cobalt, zinc, platinum, gold, aluminum, chromium, iron, manganese, molybdenum, niobium, tantalum, titanium, vanadium, palladium, rhodium, indium, tungsten, etc. The alloy used for the alloy powder is not particularly limited as long as it is used as a raw material for an electrode, and examples thereof include nickel-copper alloy, nickel-molybdenum alloy, nickel-chromium-molybdenum alloy, nickel-chromium-molybdenum-iron alloy, and other alloys containing the metals used for the metal powder. The conductive non-metal material used for the conductive non-metal powder is not particularly limited as long as it is used as a raw material for an electrode, and examples thereof include carbon, conductive oxides such as zirconium oxide, conductive titanium oxide, tin-doped indium oxide (ITO), tin oxide, zinc oxide, and fluorine-doped tin (FTO), etc.

The first embodiment is characterized in that the electrode is a molded body obtained by molding raw material powder with an average particle size of 1000 µm or less at a molding pressure of 10 MPa or more, and sintering is not performed after molding. As a result, since the raw material in the electrode is powder, it has a very high surface area per volume, making it ideal as an electrode. Here, the molded body being used as the electrode means that heat treatment such as sintering is not performed after molding, and also includes performing processing of the molded body to match the shape of the electrode later. Since a molded body without sintering has a very high surface area while maintaining a certain degree of strength, the raw material powder used in the present invention is preferably metal powder and/or alloy powder.

It is preferable that a catalyst is further added to the raw material powder. By molding the raw material powder containing the catalyst at a pressure of 10 MPa or more, the efficiency of the obtained electrode can be enhanced. In the present invention, after molding the raw material powder not containing the catalyst at a molding pressure of 10 MPa or more, the catalyst may be provided on the surface of the electrode by coating or the like. Since the electrode of the present invention has a large number of pores on the surface, even if the catalyst is provided on the surface of the electrode by coating, roll-to-roll, etc., the catalyst penetrates into the pores on the electrode surface, thereby reducing deterioration and falling off with use. However, by adding a catalyst to the raw material powder and molding it at a molding pressure of 10 MPa or more, the catalyst is provided on the surface and inside the pores of the obtained electrode, and deterioration and falling off with use can be prevented. That is, when a catalyst is added to raw material powder and then molded, the catalyst is uniformly dispersed in the electrode, and even if only molding is performed without subsequent sintering, the catalyst is fixed in the electrode and does not peel off. Also, because the catalyst is uniformly dispersed in the metal, it is possible to obtain sufficient activity with a small amount of catalyst compared to other methods. Because the raw material powder and catalyst in the electrode are powders, it has a very high surface area per volume, making it ideal for an electrode.

The catalyst is not particularly limited as long as it is generally used for electrodes, and examples thereof include at least one noble metal selected from the group consisting of Ir, Ru, Rh, Pd, and Pt and/or its oxide, oxygen generating catalysts such as CaCu₃Fe₄O₁₂, Bi_{2.4}Ru_{1.6}O₇, NiFeOOH, and BSCF, etc. The catalyst may be either a conductive catalyst or a non-conductive catalyst.

The form of the catalyst added to the raw material powder is not particularly limited, but when the catalyst has conductivity, the catalyst may be added as it is or as a catalyst ink. The catalyst ink can be produced by wet mixing with a binder such as PTFE or Nafion and drying it. The amount of the binder is preferably 1/1000 to the same amount as the mass of the catalyst. By adding the catalyst ink to the raw material powder, the catalyst can be more firmly fixed in the electrode without sintering after molding. When the catalyst to be added does not have conductivity, it is preferable to further add a conductive material such as carbon or conductive oxide. The conductive material is preferably 1/100 to 10 times the mass of the catalyst.

The amount of the catalyst is preferably 0.03% to 5% by mass of the amount of the raw material powder. Here, the amount of catalyst refers to the mass of catalyst added to the raw material powder, and even when the catalyst is added in various forms such as catalyst ink, it refers to the mass of catalyst contained therein. When the amount of catalyst is less than 0.03% by mass of the amount of the raw material powder, the effect of the catalyst is insufficient. When the amount of catalyst is more than 5% by mass of the amount of the raw material powder, the effect of the catalyst relative to the amount added is low and it is not economical.

When a catalyst is added to raw material powder, it is preferable that a fluorine resin is further added to the raw material powder, which allows the catalyst and conductive material to adhere to the electrode, thereby improving the effect of the catalyst. Examples of fluorine resin include polytetrafluoroethylene, perfluoroalkoxy fluorine resin, polyvinylidene fluoride, and perfluoroalkylsulfonic acid polymers. The amount of fluorine resin added is preferably 1/1000 or more and 1 time or less by mass of the amount of catalyst added.

After molding the raw material powder, heat treatment may be further performed. By performing the heat treatment, the strength of the electrode can be increased. That is, the method according to the second embodiment of the present invention for manufacturing the electrode that has a specific surface area of 1 × 10⁴ cm⁻¹ or more, and has a surface in which pores occupy 5% or more and 20% or less by area ratio when observed by SEM, comprises steps of molding a raw material powder that has an average particle size of 1000 µm or less, and contains at least one selected from the group consisting of metal powder, alloy powder and conductive non-metal powder, at a molding pressure of 10 MPa or more, and subjecting the resultant molded body to a heat treatment, the resultant heat-treated body being used as an electrode. Here, pores mean the gaps between particles in the heat-treated body, including linear-like or mesh-like pores formed continuously between multiple particles.

The second embodiment is common to the first embodiment except that the molded body is subjected to heat treatment, and the description of the common parts with the first embodiment will be omitted. Instead of using the molded body as an electrode as it is, the molded body is subjected to heat treatment to obtain a heat-treated body, which is used as the electrode, whereby the strength of the obtained electrode can be increased. However, since the heat treatment causes melting and aggregation of powder particles, which reduces the pore ratio and specific surface area, the temperature and treatment time are set within a range such that the obtained electrode has a specific surface area of 1×10⁴ cm⁻¹ or more, and pores of 5% or more by an area ratio when the surface is observed by SEM. Here, heat-treated body being used as the electrode means that no additional heat treatment such as sintering is performed after the heat treatment, and also includes performing processing of the molded body to match the shape of the electrode later. The heat treatment temperature can be appropriately set depending on components and particle size of the raw material powder and molding pressure, but is preferably 150 to 900°C, more preferably 150 to 700°C, and further preferably 300 to 500°C. The heat treatment is preferably performed in a vacuum or in an inert gas atmosphere, but can also be performed in air as long as it is not oxidized. In other words, unlike normal sintering, it is desirable to perform heat treatment to the extent that powder particles do not fuse sufficiently with adjacent particles. Specifically, when the surface of the electrode obtained by heat treatment is observed by SEM, the fusion rate of the particles is preferably 80% or less. Specifically, the area of the outer surface of all powder particles which is fused with adjacent particles is determined by using a scanning electron microscope in a range where one side of the observed area of the electrode surface is 5 times or more and 10 times or less the average particle size of the raw material powder, and the average value is taken as the fusion rate of the particles. The fusion rate of the particles is preferably 50% or less, and more preferably 5% or less.

When the specific surface area per unit volume of the electrode obtained by the manufacturing method of the present invention is less than 1×10⁴ cm⁻¹, the surface area of the electrode in contact with the solution during electrolysis is small, resulting in a low current density of the electrode. The specific surface area per unit volume is determined by measuring the specific surface area per mass using a Micromeritics TriStar II, and calculating based on the density obtained from the volume and mass of only the electrode support, catalyst and additives, excluding the pores in the electrode. The specific surface area per unit volume of the electrode is more preferably 2×10⁴ to 2×10⁵ cm⁻¹, and further preferably 5×10⁴ to 1×10⁵ cm⁻¹.

When the surface of the electrode obtained by the manufacturing method of the present invention is observed by SEM, less than 5% by area ratio of the pores, which are the gaps between particles, are insufficient, resulting in deterioration of current density, and more than 20% by area ratio of the pores result in too little contact between the powder particles to maintain strength. The pore ratio is the ratio of the area other than the electrode support relative to the entire observed range when 10 fields of view are observed with a scanning electron microscope, in which one side of the observed range is 10 times or more the average particle size of the powder. When the surface is observed by SEM, the pores are more preferably 10-20%, and further preferably 10-15%, by area ratio.

The electrode obtained by the manufacturing method of the present invention preferably has an average pore size of 1/50 or more and 5 times or less the average particle size of the raw material powder, and a maximum pore size of 10 times or less the average particle size of the raw material powder, when its surface is observed by SEM. The size of the pores is measured by observing 10 fields of view with a scanning electron microscope, in which one side of the observed range is 10 times or more the average particle size of the powder, extracting the pores by image processing, and calculating the area to obtain the equivalent circle diameter. When the average size of the pores on the surface of the electrode is less than 1/50 the average particle size of the raw material powder, the effect of electrochemical activity by the pores is reduced. Furthermore, when the average size of the pores is more than 5 times the average particle size of the raw material powder or the maximum size of the pores is more than 10 times the average particle size of the raw material powder, the effect of increasing the specific surface area by the pores is reduced, and the contact between the powders is insufficient, resulting in decrease in strength. In addition, it becomes impossible to distinguish the pores from pores that are intentionally added. The average size of the pores on the surface of the electrode is more preferably 1/10 or more and 5 times or less the average particle size of the raw material powder, and further preferably 5/10 or more and 3 times or less. The maximum size of the pores on the surface of the electrode is more preferably 3 times or less the average particle size of the raw material powder.

0% or more and 70% or less by volume of coarse pore material may be added to the raw material powder, whereby coarse pores having a size of more than 10 times the particle size of the raw material powder can be present, when the surface of the electrode is observed by SEM, by removing the coarse pore material after molding the raw material powder. These coarse pores are large pores intentionally introduced for the purpose of promoting the diffusion of solutions and gases into the inside of the electrode during electrolysis. Since the coarse pores have almost the same shape and size as the particle-like coarse pore material to be removed, the coarse pores hardly contribute to increase in the surface area, compared to the pores that are the gaps between the particles have a long and thin linear-like or mesh-like shape and exert the effect of increasing the surface area and increasing the reaction amount, and thus the coarse pores are not counted in the pore ratio of the present invention. Examples of coarse pore materials include paraffin, urethane resin, salt powder such as potassium chloride, etc. The method for removing the coarse pore material is not particularly limited, but it can be removed by the above-described heat treatment. When more than 70% by volume of the coarse pore material is added to the raw material powder, the strength cannot be maintained.

In order to make the raw material powder easier to mold, a molding aid may be added to the raw material powder. The molding aid can be removed by post-treatment after molding the raw material powder. Examples of the molding aid include paraffin. The post-treatment may be the heat treatment described above.

### [2] Electrode

An electrode of the first embodiment of the present invention is obtained by the above-described manufacturing method, that is, is formed by molding a raw material powder that has an average particle size of 1000 µm or less, and contains at least one selected from the group consisting of metal powder, alloy powder and conductive non-metal powder, at a molding pressure of 10 MPa or more, and has a specific surface area of 1 × 10⁴ cm⁻¹ or more, and a surface in which pores occupy 5% or more and 20% or less by area ratio when observed by SEM.

When the specific surface area per unit volume of the electrode is less than 1×10⁴ cm⁻¹, the surface area of the electrode in contact with the solution during electrolysis is small, resulting in a low current density of the electrode. The specific surface area per unit volume is determined by measuring the specific surface area per mass using a Micromeritics TriStar II, and calculating based on the density obtained from the volume and mass of only the electrode support, catalyst and additives, excluding the pores in the electrode. The specific surface area per unit volume of the electrode is more preferably 2×10⁴ to 2×10⁵ cm⁻¹, and further preferably 5×10⁴ to 1×10⁵ cm⁻¹.

When the surface of the electrode is observed by SEM, less than 5% by area ratio of the pores, which are the gaps between particles, are insufficient, resulting in deterioration of current density, and more than 20% by area ratio of the pores result in too little contact between the powder particles to maintain strength. The pore ratio is the ratio of the area other than the electrode support relative to the entire observed range when 10 fields of view are observed with a scanning electron microscope, in which one side of the observed range is 10 times or more the average particle size of the powder. When the surface is observed by SEM, the pores are more preferably 10-20%, and further preferably 10-15%, by area ratio.

The electrode of the first embodiment is a powder molded body made by press molding raw material powder, without sintering after molding, and therefore has a very high surface area per volume, making it ideal for an electrode.

The average pore size is preferably 0.002 µm or more. When the average pore size is less than 0.002 µm, the pores will be in the so-called micropore region and will not contribute to the penetration of a solution into the inside of the electrode.

The electrode according to the first embodiment may be provided with a catalyst on the surface of the electrode by coating or the like, but it is preferable to manufacture the electrode by adding the catalyst to the raw material powder. The electrode obtained by adding the catalyst to the raw material powder and molding at a molding pressure of 10 MPa or more has the catalyst provided on its surface and inside the pores in a state that is unlikely to deteriorate or fall off with use. Therefore, the catalyst is dispersed in the electrode and is fixed in the electrode, so that it does not peel off. In addition, as described above, the catalyst may be added to the raw material powder as it is or as a catalyst ink, and a conductive material such as carbon or conductive oxide may be further added, or a fluorine resin may be further added.

In the present invention, in order to increase the strength of the electrode, a heat-treated body which is further subjected to heat treatment after molding of raw material powder may be used as the electrode. In other words, the electrode according to the second embodiment of the present invention is an electrode obtained by molding raw material powder that has an average particle size of 1000 µm or less, and contains at least one selected from the group consisting of metal powder, at a molding pressure of 10 MPa or more, and subjecting the resultant molded body to a heat treatment, and has a specific surface area of 1 × 10⁴ cm⁻¹ or more, and a surface in which pores occupy 5% or more and 20% or less by area ratio when observed by SEM.

By performing heat treatment on the powder molded body at a temperature lower than the conventional sintering temperature, the resultant electrode can have sufficient strength by partly fusion of the particles while maintaining a very high surface area per volume. Specifically, the fusion rate of the particles is preferably 80% or less. Note that detailed explanation of the parts common to the explanation of the electrode manufacturing method according to the first and second embodiments of the present invention will be omitted.

The electrode of the present invention can be suitably used as an electrode for electrolysis, which is used to pass electricity through an aqueous solution to electrolyze and thereby generate (synthesize) a product. Examples of the product include hydrogen, carbon monoxide, formic acid, etc., and the electrode may also be used for the electrolytic synthesis of organic compounds. The electrode of the present invention is not limited to those, and can be used for various applications such as an electrode for a fuel cell, an electrode for a metal-air secondary battery, an electrode for a plating device, an electrode for a ballast water treatment device, etc.

### EXAMPLES

The present invention will be specifically explained by Examples below without intention of restriction.

### Example 1

Copper powder manufactured by Fukuda Metal Foil & Powder Co., Ltd. with an average particle size of 5 µm and nickel powder manufactured by Inco Ltd. with an average particle size of 2.5 µm were prepared. The average particle size of the copper powder was determined as the D50 value in the particle size distribution measurement by the laser diffraction and scattering method using a Microtrac MT3300EXII, and the average particle size of the nickel powder was determined by a Fisher Model 95 Sub-Sieve particle size distribution measurement device. These powders were cold-compression molded at pressures of 98 MPa and 490 MPa to 10 × 13 × 1 mm³, and then heat treated under the conditions shown in Table 1 to produce electrodes of Invention Products 1 to 10 and Comparative Products 1 to 7. The specific surface area, pore ratio, and fusion rate of the electrodes are shown in Table 1. The specific surface area was determined by measuring the specific surface area per mass using a Micromeritics TriStar II, and calculating based on the density obtained from the volume and mass of only the electrode support, catalyst and additives, excluding the pores in the electrode. The pore ratio was determined by calculating the area except the electrode support relative to the entire observed range when 10 fields of view were observed with a scanning electron microscope, in which one side of the observed range was 10 times or more the average particle size of the powder. The pore size was determined by extracting the pores by image processing, and calculating the area to obtain the equivalent circle diameter. The fusion rate was determined by calculating the area of the fusion with adjacent particles on the outer surface of all powder particles in the observed range of the electrode surface where one side is 5 times or more 10 times or less the average particle size of the raw material powder to obtain the average value.

**Table 1**

| | Support | Molding Pressure (MPa) | Treatment Temperature (°C) | Specific Surface Area (×10⁴ cm⁻¹) | Pore Rate (%) | Fusion Rate (%) |
|---|---|---|---|---|---|---|
| Invention product 1 | Ni Compact | 490 | - | 5.69 | 19.3 | 0 |
| Invention product 2 | Ni Compact | 490 | 400 | 3.64 | 19.9 | 0 |
| Invention product 3 | Ni Compact | 490 | 500 | 2.60 | 17.4 | 46 |
| Invention product 4 | Ni Compact | 490 | 700 | 1.86 | 7.0 | 79 |
| Comparative product 1 | Ni Compact | 490 | 900 | 0.72 | 0.7 | 94 |
| Comparative product 2 | Ni Compact | 490 | 1100 | 0.45 | 0.0 | 100 |
| Invention product 5 | Cu Compact | 490 | - | 2.15 | 8.3 | 0 |
| Invention product 6 | Cu Compact | 490 | 300 | 1.84 | 7.0 | 0 |
| Invention product 7 | Cu Compact | 490 | 400 | 1.71 | 6.8 | 0 |
| Comparative product 3 | Cu Compact | 490 | 500 | 0.68 | 2.0 | 87 |
| Comparative product 4 | Cu Compact | 490 | 700 | 0.26 | 0.4 | 98 |
| Comparative product 5 | Cu Compact | 490 | 900 | 0.55 | 0.0 | 100 |
| Invention product 8 | Cu Compact | 98 | - | 2.50 | 19.4 | 0 |
| Invention product 9 | Cu Compact | 98 | 400 | 2.13 | 18.3 | 0 |
| Invention product 10 | Cu Compact | 98 | 500 | 2.25 | 18.4 | 49 |
| Comparative product 6 | Cu Compact | 98 | 700 | 0.25 | 3.1 | 93 |
| Comparative product 7 | Cu Compact | 98 | 900 | 0.28 | 0.4 | 99 |

For the electrodes of Invention Products 1 to 10 and Comparative Products 1 to 7, only a 10 × 10 mm² surface was exposed and the remaining part was protected with insulating tape and insulating resin. For Invention Products 1 to 4 and Comparative Products 1 and 2, O₂ was bubbled into an aqueous solution of 5.2 mol L⁻¹ KOH dissolved in pure water, and for Invention Products 5 to 10 and Comparative Products 3 to 7, CO₂ was bubbled into an aqueous solution of 0.5 mol L⁻¹ KHCO₃ dissolved in pure water, and electrochemical measurements were performed.

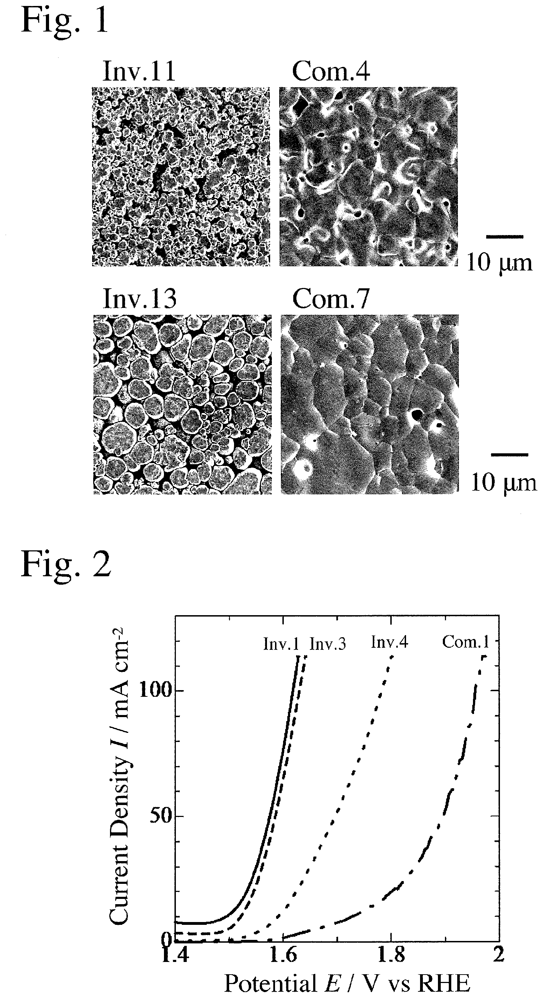

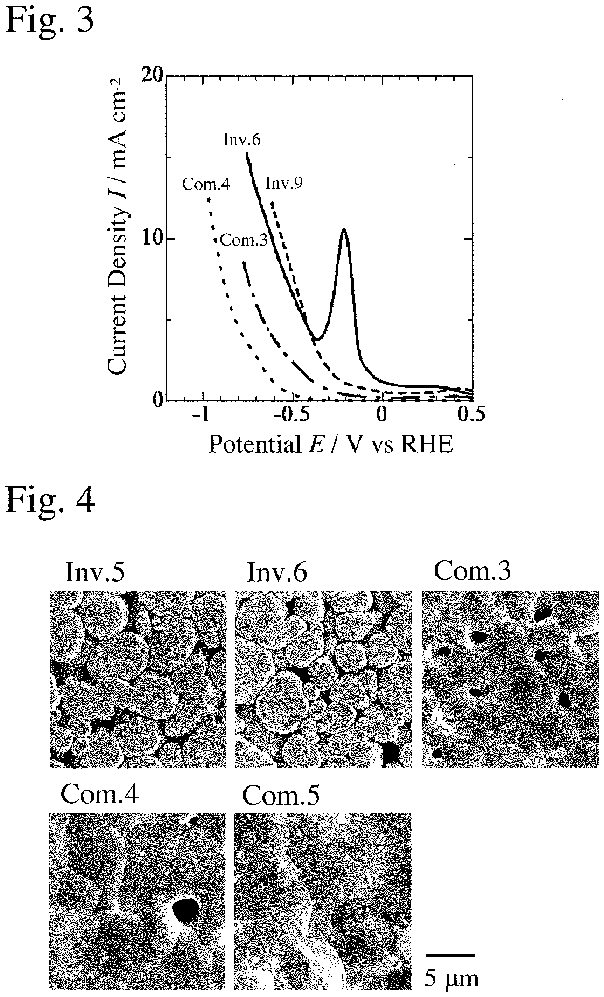

As shown in Table 1 and Fig. 1, in the Invention Products with the appropriate heat treatment temperature, a fusion rate was 80% or less, sintering did not progress and pores were maintained, whereas in the Comparative Products with the too high heat treatment temperature, sintering progressed too much and pores were lost. As shown in Figs. 2 and 3, in the Invention Products with a pore rate of 5% or more, electrodes with a high current density were obtained, whereas in the Comparative Products with a pore rate of less than 5%, current density significantly dropped.

Fig. 4 shows SEM photographs of the electrode surfaces of Invention Products 5 and 6 and Comparative Products 3 to 5. As shown in Fig. 4, as the temperature of the heat treatment increases, the pore ratio decreases, the specific surface area becomes smaller, and the current density drops significantly.

### Example 2

Raw material powders consisting of metal powders or alloy powders were prepared as shown in Table 2. The average particle sizes of the raw material powders are shown in Table 2. These raw material powders were cold-compression molded at a pressure of 490 MPa to a size of 10 × 13 × 1 mm³ to produce Invention Products 11 to 25. No heat treatment was performed after molding in any of the cases. The specific surface area and pore ratio of each electrode are shown in Table 2. It has been found that electrodes with excellent specific surface area and pore ratio can be produced even when various metal, alloy and conductive powders with different particle sizes are used.

**Table 2**

| | Support | Average Particle Size (µm) | Specific Surface Area (×10⁴ cm⁻¹) | Pore Rate (%) |
|---|---|---|---|---|
| Invention Product 1 | Ni Compact | 2.5 | 5.69 | 19.3 |
| Invention Product 5 | Cu Compact | 5 | 2.15 | 8.3 |
| Invention Product 11 | Ag Compact | 5 | 2.63 | 9.7 |
| Invention Product 12 | Al Compact | 20 | 1.81 | 11.6 |
| Invention Product 13 | Cr Compact | 10 | 1.44 | 14.8 |
| Invention Product 14 | Fe Compact | 10 | 1.65 | 17.5 |
| Invention Product 15 | Mn Compact | 10 | 1.41 | 10.1 |
| Invention Product 16 | Mo Compact | 4 | 1.74 | 19.1 |
| Invention Product 17 | Nb Compact | 20 | 1.28 | 19.2 |
| Invention Product 18 | Ta Compact | 3 | 2.33 | 11.9 |
| Invention Product 19 | Ti Compact | 20 | 1.22 | 13.0 |
| Invention Product 20 | V Compact | 10 | 1.34 | 10.4 |
| Invention Product 21 | W Compact | 0.7 | 9.46 | 19.8 |
| Invention Product 22 | Fe-17Cr-13Ni-2Mo Compact | 7 | 1.12 | 13.3 |
| Invention Product 23 | C Compact | 0.4 | 17.10 | 9.1 |
| Invention Product 24 | Cu Compact | 0.1 | 62.30 | 12.4 |
| Invention Product 25 | Cu Compact | 180.0 | 1.07 | 13.1 |

### Example 3

As the raw material powder, nickel powder manufactured by Inco Ltd. with an average particle size of 2.5 µm was prepared. As the catalyst, CaCu₃Fe₄O₁₂, which was synthesized by processing for 1 hour under conditions of 8 GPa and 900°C, was prepared. The catalyst ink was made by wet mixing CaCu₃Fe₄O₁₂, carbon black manufactured by Denka Company Limited, and PTFE manufactured by FUJIFILM Wako Pure Chemical Corporation in a mass ratio of 30 : 3 : 1, and drying it.

Nickel powder and catalyst ink were wet-ground and mixed for 2 hours at the ratio of the catalyst amount shown in Table 3, and then dried to obtain a mixed powder. The mixed powder was cold-compression molded at a pressure of 490 MPa to a size of 10 × 13 × 1 mm³, and only a 10 × 10 mm² surface was exposed and the remaining part was protected with insulating tape and insulating resin, to produce the electrodes of Invention Products 26 to 31.

As a comparative material, commercially available porous nickel (Celmet, manufactured by Sumitomo Electric Industries, Ltd.) was prepared. After processing the porous nickel to 10 × 13 × 1 mm³, only a 10 × 10 mm² surface was exposed and the remaining part was protected with insulating tape and insulating resin, to produce Comparative Product 8. In addition, after processing the porous nickel to 10 × 13 × 1 mm³, only a 10 × 10 mm² surface was exposed and the remaining part was protected with insulating tape and insulating resin, and a total 1-mg catalyst ink, which was prepared by dispersing the catalyst ink in 2-propanol, impregnating it into the porous nickel and drying, was applied to produce Comparative Product 9.

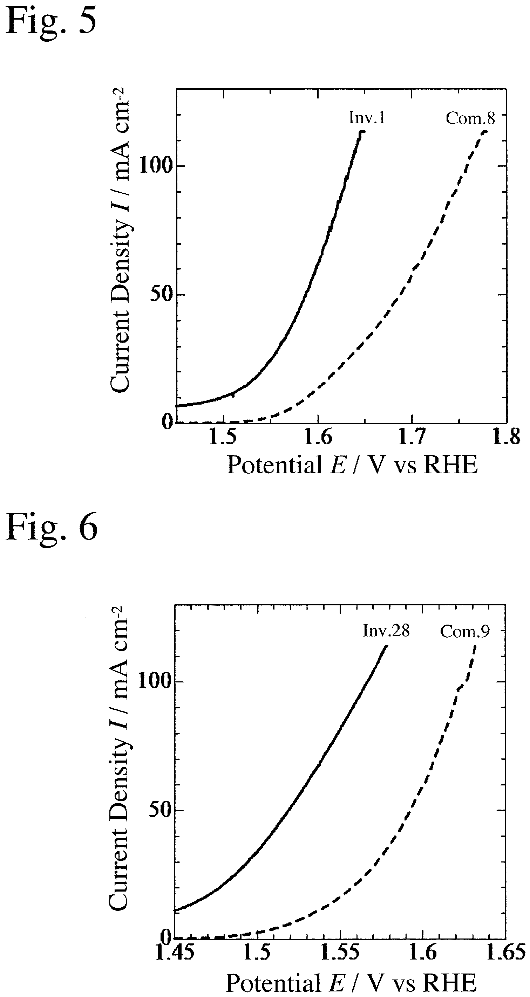

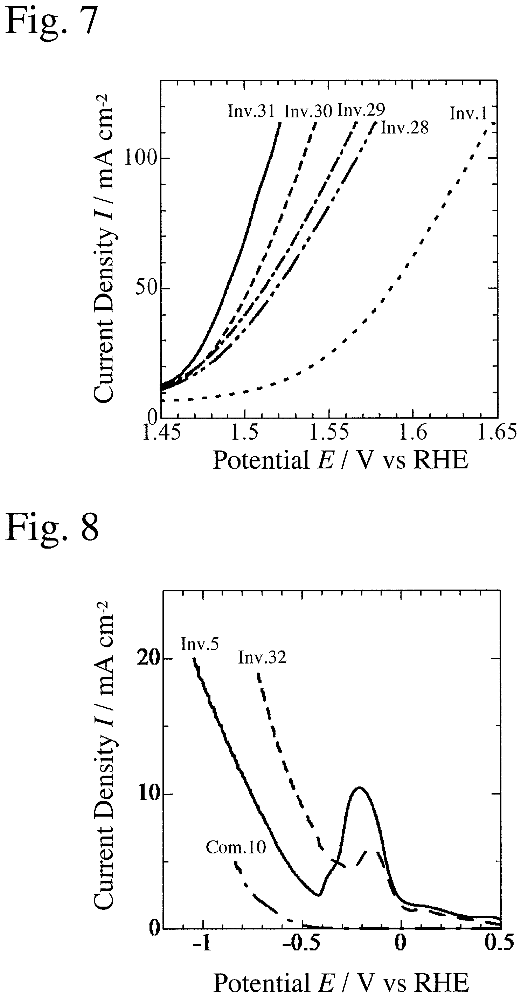

For Invention Products 26 to 31 and Comparative Products 8 and 9, O₂ was bubbled into an aqueous solution in which 5.2 mol L⁻¹ of KOH was dissolved in pure water, and electrochemical measurements were performed. As shown in Fig. 5, by using nickel compact as the support, the specific surface area of the support is improved, and a high current density is obtained. As shown in Fig. 6, by adding a catalyst to the nickel compact, a very high activity is obtained with a catalyst amount of 0.17 mass%, which is smaller than 0.9 mass% of the amount of catalyst applied to the porous nickel. As shown in Fig. 7, the current density increased depending on the amount of catalyst.

**Table 3**

| | Support | Catalyst Type | Catalyst Amount (mass%) | Solution Concentration (mol L⁻¹) | Electrolyte |
|---|---|---|---|---|---|
| Invention Product 1 | Ni Compact | - | - | 5.2 | KOH |
| Invention Product 26 | Ni Compact | CaCu₃Fe₄O₁₂ | 0.03 | 5.2 | KOH |
| Invention Product 27 | Ni Compact | CaCu₃Fe₄O₁₂ | 0.10 | 5.2 | KOH |
| Invention Product 28 | Ni Compact | CaCu₃Fe₄O₁₂ | 0.17 | 5.2 | KOH |
| Invention Product 29 | Ni Compact | CaCu₃Fe₄O₁₂ | 0.33 | 5.2 | KOH |
| Invention Product 30 | Ni Compact | CaCu₃Fe₄O₁₂ | 1.00 | 5.2 | KOH |
| Invention Product 31 | Ni Compact | CaCu₃Fe₄O₁₂ | 2.00 | 5.2 | KOH |
| Comparative Product 8 | Porous Ni | - | - | 5.2 | KOH |
| Comparative Product 9 | Porous Ni | CaCu₃Fe₄O₁₂ | 0.9 | 5.2 | KOH |

### Example 4

As the raw material powder, copper powder manufactured by Fukuda Metal Foil & Powder Co., Ltd. with an average particle size of 5 µm was prepared. As the catalyst, IrO₂ manufactured by Sigma-Aldrich was prepared. The copper powder and catalyst were wet-milled and mixed for 2 hours in the ratio of the amount of the catalyst shown in Table 4, and then dried. The resultant mixed powder was cold-compression molded at a pressure of 490 MPa to a size of 10 × 13 × 1 mm³, and only a 10 × 10 mm² surface was exposed and the remaining part was protected with insulating tape and insulating resin, to produce the electrode of Invention Product 32.

As a comparative material, a commercially available oxygen-free copper plate was prepared. The oxygen-free copper plate was cut to 10 × 13 × 1 mm³, and only a 10 × 10 mm² surface was exposed and the remaining part was protected with insulating tape and insulating resin, to produce the electrode of Invention Product 10.

For Invention Product 32 and Comparative Product 10, CO₂ was bubbled into an aqueous solution of 0.5 mol L⁻¹ KHCO₃ dissolved in pure water, and electrochemical measurements were performed. The results are shown in Table 4 and Fig. 8. As shown in Fig. 8, an electrode with a high current density was also obtained even when copper powder was used as the raw material powder and CO₂ was dissolved in the aqueous solution.

**Table 4**

| | Support | Catalyst Type | Catalyst Amount (mass%) | Solution Concentration (mol L⁻¹) | Electrolyte |
|---|---|---|---|---|---|
| Invention Product 5 | Cu Compact | - | - | 0.5 | KHCO₃ |
| Invention Product 32 | Cu Compact | IrO₂ | 0.33 | 0.5 | KHCO₃ |
| Comparative Product 10 | Cu Plate | - | - | 0.5 | KHCO₃ |

### Example 5

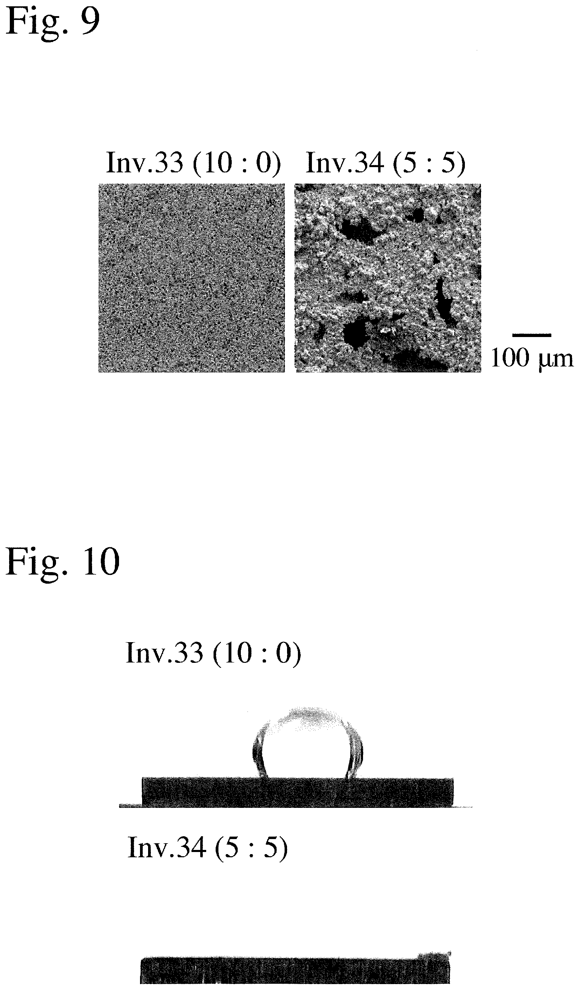

As the raw material powder, nickel powder manufactured by Inco Ltd. with an average particle size of 2.5 µm was prepared. As the coarse pore material, crushed paraffin with an average particle size of 0.3 mm was prepared. The nickel powder and the coarse pore material were mixed at volume ratios of 10 : 0 and 5 : 5, respectively. The mixture was molded at a molding pressure of 490 MPa to a size of 10 × 13 × 1 mm³, and the coarse pore material was removed by post-treatment, to produce the electrodes of Invention Products 33 and 34. The surfaces of the electrodes of Invention Products 33 and 34 were observed with a scanning electron microscope, and the results are shown in Fig. 9. As shown in Fig. 9, no coarse pore larger than 25 µm was observed in the electrode of Invention Product 33, in which the volume ratio of the nickel powder : coarse pore material was 10 : 0, whereas coarse pores larger than 25 µm were observed in the electrode of Invention Product 34, in which the volume ratio of the nickel powder : coarse pore material was 5 : 5.

50µL of 0.5 mol L⁻¹ KHCO₃ aqueous solution was dropped onto the 10 × 13 mm² surface of the electrodes of Invention Products 33 and 34, and a 13 × 1 mm² surface of the electrodes was observed. The results are shown in Fig. 10. As shown in Fig. 10, the KHCO₃ aqueous solution did not penetrate into the electrode of Invention Product 33, in which the volume ratio of nickel powder : coarse pore material was 10 : 0, and formed droplets, whereas the solution penetrated the electrode of Invention Product 34, in which the volume ratio of nickel powder : coarse pore material was 5 : 5, and did not form droplets, indicating that an electrode through which the liquid could easily penetrate was obtained.

### Example 6

As raw material powder, nickel powder manufactured by Inco Ltd. with an average particle size of 2.5 µm, copper powder manufactured by Fukuda Metal Foil & Powder Co., Ltd. with an average particle size of 5 µm, or silver powder manufactured by Fukuda Metal Foil & Powder Co., Ltd. with an average particle size of 5 µm were prepared, and molded at the molding pressure shown in Table 5. After potassium chloride with an average particle size of 0.3 mm was added in the amount shown in Table 5 as coarse pore material, the raw material powder was molded, and then the coarse pore material was removed by post-treatment to produce Invention Products 35 to 41 and Comparative Products 11 and 12. The compressive strength of each Product is shown in Table 5. In Invention Products 1, 5, 8, and 35 to 41, which had a compressive strength of 10 MPa or more, electrodes were able to be produced. In Comparative Products 11 and 12, which had a compressive strength of less than 10 MPa, electrodes were damaged during production. Therefore, when the compressive strength was 10 MPa or more, it was possible to produce an electrode. Even when a coarse pore material was added, it was possible to produce an electrode by controlling the molding pressure and heat treatment temperature.

**Table 5-1**

| | Support | Molding Pressure (MPa) | Treatment Temperature (°C) | Coarse Pore Material (Vol.%) | Compressive Strength (MPa) |
|---|---|---|---|---|---|
| Invention Product 1 | Ni Compact | 490 | - | - | 146 |
| Invention Product 35 | Ni Compact | 98 | - | - | 14 |
| Comparative Product 11 | Ni Compact | 49 | - | - | 8 |
| Invention Product 36 | Ni Compact | 490 | - | 50 | 44 |
| Invention Product 37 | Ni Compact | 490 | - | 70 | 28 |
| Invention Product 38 | Ni Compact | 98 | - | 50 | 18 |
| Comparative Product 12 | Ni Compact | 98 | - | 70 | 5 |
| Invention Product 39 | Ni Compact | 98 | 500 | 70 | 57 |
| Invention Product 5 | Cu Compact | 490 | - | - | 220 |
| Invention Product 8 | Cu Compact | 98 | - | - | 19 |
| Invention Product 40 | Ag Compact | 490 | - | - | 202 |
| Invention Product 41 | Ag Compact | 98 | - | - | 13 |

**Table 5-2**

| | Support | Specific Surface Area (×10⁴ cm⁻¹) | Pore Rate (%) | Electrode Producibility |
|---|---|---|---|---|
| Invention Product 1 | Ni Compact | 5.69 | 19.3 | Yes |
| Invention Product 35 | Ni Compact | 5.76 | 21.5 | Yes |
| Comparative Product 11 | Ni Compact | 5.96 | 29.6 | No |
| Invention Product 36 | Ni Compact | 5.22 | 17.2 | Yes |
| Invention Product 37 | Ni Compact | 5.36 | 17.8 | Yes |
| Invention Product 38 | Ni Compact | 5.91 | 18.8 | Yes |
| Comparative Product 12 | Ni Compact | 5.97 | 24.5 | No |
| Invention Product 39 | Ni Compact | 2.57 | 15.5 | Yes |
| Invention Product 5 | Cu Compact | 2.15 | 8.3 | Yes |
| Invention Product 8 | Cu Compact | 2.50 | 19.4 | Yes |
| Invention Product 40 | Ag Compact | 2.63 | 9.7 | Yes |
| Invention Product 41 | Ag Compact | 2.99 | 12.4 | Yes |

### Example 8

As the raw material powder, copper powder manufactured by Fukuda Metal Foil & Powder Co., Ltd. with an average particle size of 5 µm and copper powder classified to have an average particle size of 850 µm were prepared. These were mixed in the ratios shown in Table 6 and molded at a pressure of 490 MPa to a size of 20 × 20 × 0.3 mm³ to produce the electrodes of Invention Products 44 and 45 and Comparative Product 13.

**Table 6**

| | 5 µm Cu Powder (Vol.%) | 850 µm Cu Powder (Vol.%) | Specific Surface Area (×10⁴ cm⁻¹) | Pore Rate (%) |
|---|---|---|---|---|
| Invention Product 44 | 100 | 0 | 5.72 | 19.7 |
| Comparative Product 13 | 0 | 100 | 0.10 | 25.3 |
| Invention Product 45 | 11 | 89 | 4.38 | 24.7 |

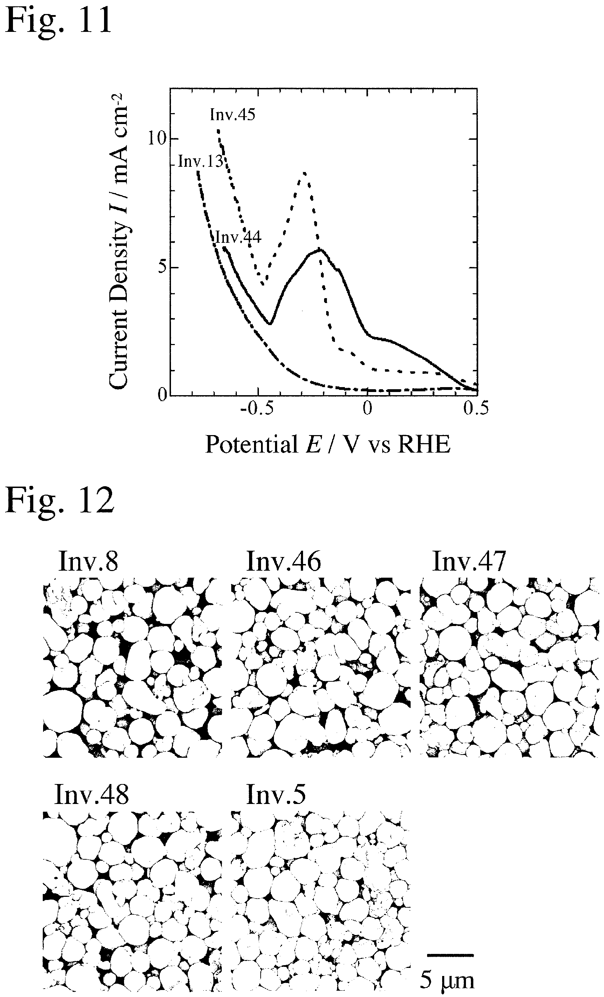

As shown in Table 6 and Fig. 11, when an electrode was produced using only raw material powder with a large particle size of 850 µm, the specific surface area was very small of 0.10 × 10⁴ cm⁻¹. When copper powder with a large particle size of 850 µm was mixed with copper powder with a small particle size of 5 µm, both the specific surface area and pore ratio were good, and an electrode with a high current density was obtained.

### Example 9

As the raw material powder, copper powder manufactured by Fukuda Metal Foil & Powder Co., Ltd. with an average particle size of 5 µm was prepared. These powders were cold-compression molded to 10 × 13 × 1 mm³ at the molding pressure shown in Table 7 to produce electrodes of Invention Products 46 to 48. None of them were subjected to heat treatment after molding. The specific surface area and pore ratio of the electrodes of Invention Products 5, 8, and 46 to 48 are shown in Table 7, and SEM photographs of the electrode surfaces are shown in Fig. 12. As shown in Fig. 12, the surface condition of the electrode depends on the molding pressure, and as the molding pressure increases, the pore ratio decreases and the specific surface area becomes smaller.

**Table 7**

| | Support | Molding Pressure (MPa) | Specific Surface Area (×10⁴ cm⁻¹) | Pore Rate (%) |
|---|---|---|---|---|
| Invention Product 8 | Cu Compact | 98 | 2.50 | 19.4 |
| Invention Product 46 | Cu Compact | 196 | 2.31 | 14.4 |
| Invention Product 47 | Cu Compact | 294 | 2.25 | 13.8 |
| Invention Product 48 | Cu Compact | 392 | 2.18 | 12.5 |
| Invention Product 5 | Cu Compact | 490 | 2.15 | 8.3 |

## Claims

1. A method for manufacturing an electrode that has a specific surface area of 1 × 10⁴ cm⁻¹ or more, and has a surface in which pores occupy 5% or more and 20% or less by area ratio when observed by SEM,
the method comprising a step of molding a raw material powder that has an average particle size of 1000 µm or less, and contains at least one selected from the group consisting of metal powder, alloy powder and conductive non-metal powder, at a molding pressure of 10 MPa or more,
the resultant molded body being used as an electrode.

2. A method for manufacturing an electrode that has a specific surface area of 1 × 10⁴ cm⁻¹ or more, and has a surface in which pores occupy 5% or more and 20% or less by area ratio when observed by SEM,
the method comprising steps of molding a raw material powder that has an average particle size of 1000 µm or less, and contains at least one selected from the group consisting of metal powder, alloy powder and conductive non-metal powder, at a molding pressure of 10 MPa or more, and
subjecting the resultant molded body to a heat treatment,
the resultant heat-treated body being used as an electrode.

3. The method for manufacturing an electrode according to claim 2, wherein when the surface of the heat-treated body is observed by SEM, the fusion rate of particles is 80% or less.

4. The method for manufacturing an electrode according to any one of claims 1 to 3, wherein a catalyst is added to the raw material powder.

5. The method for manufacturing an electrode according to claim 4, wherein the amount of the catalyst added is 0.03% or more and 5% or less by mass of the amount of the raw material powder.

6. The method for manufacturing an electrode according to claim 4 or 5, wherein
carbon or conductive oxide is added to the raw material powder, and wherein
the amount of the carbon or conductive oxide added is 1/100 or more and 10 times or less by mass the amount of the catalyst added.

7. The method for manufacturing an electrode according to any one of claims 4 to 6, wherein
fluorine resin is added to the raw material powder, and wherein
the amount of the fluorine resin added is 1/1000 or more and 1 time or less by mass of the amount of the catalyst added.

8. The method for manufacturing an electrode according to any one of claims 1 to 7, wherein
the raw material powder is a mixture of powder with an average particle size of more than 100 µm and 1000 µm or less and powder with an average particle size of 10 µm or less, and wherein
the molding pressure is 10 MPa or more and 700 MPa or less.

9. The method for manufacturing an electrode according to any one of claims 1 to 8, wherein when the surface of the electrode was observed by SEM, the average size of the pores is 1/50 or more and 5 times or less the average particle size of the raw material powder, and the maximum size of the pores is 10 times or less the average particle size of the raw material powder.

10. The method for manufacturing an electrode according to any one of claims 1 to 9, the method further comprising steps of
adding 0% or more and 70% or less by volume of coarse pore material to the raw material powder, and
removing the coarse pore material after the step of molding the raw material powder,
so that when the surface of the electrode is observed by SEM, coarse pores with a size more than 10 times the particle size of the raw material powder are present.

11. An electrode manufactured by the method according to any one of claims 1 to 10.

12. The electrode according to claim 11, which is an electrode for electrolysis.
